## Europäisches Patentamt
## European Patent Office
## Office européen des brevets

(19)

(11) Publication number : **0 253 604 B1**

(12)

# EUROPEAN PATENT SPECIFICATION

(45) Date of publication of patent specification :
17.07.91 Bulletin 91/29

(51) Int. Cl.$^5$ : **F16L 9/14, F16L 33/00**

(21) Application number : 87306168.3

(22) Date of filing : 13.07.87

(54) Intersticed nipple for elastomeric hoses and method.

(30) Priority : 14.07.86 US 885061

(43) Date of publication of application :
20.01.88 Bulletin 88/03

(45) Publication of the grant of the patent :
17.07.91 Bulletin 91/29

(84) Designated Contracting States :
BE CH DE ES FR GB IT LI LU NL SE

(56) References cited :
WO-A-86/01574
DE-A- 3 212 150
GB-A- 2 089 460

(73) Proprietor : THE GATES RUBBER COMPANY
990 South Broadway
Denver Colorado 80209 (US)

(72) Inventor : Salinas,Philip
5029 S.Fraser St
Aurora CO 80015 (US)

(74) Representative : Carpmael, John William
Maurice et al
CARPMAELS & RANSFORD 43 Bloomsbury
Square
London, WC1A 2RA (GB)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 253 604 B1

## Description

This invention pertains to a fitting for a hose article and more particularly to a fitting for the end portion of a hose, which is solidly embedded in the wall of the hose.

In hoses, especially large industrial hoses, some type of fitting has to be installed on the end of the hose in order to connect it to either another hose or to a pipe, a valve, or some other piece of plumbing. One way of achieving contact and connection with a hose end is to use some sort of a flange arrangement. A flange is usually some sort of rim that projects outwards from a pipe or tube or hose at a right angle, giving the appearance of a collar. Often, holes are bored into the flange, which are lined up with holes that have been bored into another flange on the fixture that the hose is to be connected to, and then bolts are inserted through the holes that have been lined up in this way. When the bolts are tightened down, a seal is formed between the end of a hose and whatever other fixture the hose is thus attached to.

It has been a common practice in manufacturing larger industrial hoses to build up the end-most portion of the hose to be thicker than the rest of the hose, and therefore form a shoulder. This shoulder is useful in acting as a stop against which the flange can get a good grip on the hose. The problem with this arrangement is that after the flange has been mounted on the hose and is pushed up tight against the shoulder and is bolted onto the neighboring flange, that whenever the hose flexes, a great deal of stress will tend to concentrate on the area just behind the flange on the hose. This results in premature cracking and failure of the hose in this critical area just behind the shoulder and the flange. Therefore, ways were sought-after to move this area of stress farther away from the end area of the hose.

The shoulder at the end of the hose is usually built up by attaching a circular ring onto one of the inner layers of the hose, and then applying more layers of rubber over the inner layers of rubber and the ring as well, so as to build up the shoulder. It was realised that if the ring were solidly mounted onto a cylinder to fit over the inner layers of rubber, and if outer layers of rubber were applied over the ring and cylinder combination, then the area of stress would be moved away from the very end of the hose and the stress would be distributed along the length of the cylinder. WO-A-86/01574 discloses a hose of the type which includes a cylinder having a stop ring on its outer periphery and a plurality of protuberances between the stop ring and the rear end of the cylinder. The protuberances helped to retain the cylinder in the end of the hose. Such arrangements tended to reduce premature failure of the hose by cracking at the end portion behind the flange.

This solution had its own problems, however.

Usually, the cylinder (or "nipple" as it is more properly referred to) would be made of metal. It is very difficult to obtain a good adhesive bond between rubber and metal, so that a new mode of failure emerged : the rubber would blister away, and separate from, the metal of the nipple. Therefore, a need arose for a nipple that could be seated within a hose having a ring structure on it to provide the basis for a shoulder to mount a flange on, and which could be so firmly anchored into the walls of the hose as to minimize separation of the bond between the nipple and the walls of the hose, and yet be economical to manufacture and use. The present invention is a solution to these longfelt needs.

According to the present invention there is provided a nipple fitting for an elastomeric hose comprising a nipple and a substantially annular nipple end bead fixedly mounted circumferentially on said nipple, characterised in that the nipple is a perforated grid member defining a plurality of interstices and having a substantially cylindrical configuration and wherein the interstices are sufficiently large to permit viscoelastic flowby of an elastomer during a curing process.

Objects of this invention are to provide a nipple that will withstand high pressures and resist being blown out of or torn out of the end of a hose. Another object is to provide for a nipple that will distribute stresses along its body so that stresses will not be concentrated in one place and tend to lead to premature failure of the hose article. Another object of the present invention is to provide for a nipple fitting that is relatively inexpensive to manufacture. Yet another object of the present invention is to provide for a nipple fitting capable of being used in large industrial hoses that carry mining slurry, and not be subject to premature wearout due to the pounding nature of mining slurry that is being transported within a hose.

According to another aspect of the present invention there is provided a method of making an elastomeric hose article comprising the steps of :

fabricating a nipple ;

fabricating an annular ring ;

attaching the annular ring to the nipple circumferentially at a position substantially at the terminus of the nipple to form a nipple-annular ring assembly ;

extruding an elastomeric polymer tube ;

mounting the nipple-annular ring assembly onto an end terminus of the tube by seating the assembly in a capped-like manner ; and

covering the tube and its nipple-capped terminus with an elastomeric polymer cover ;

characterised in that the nipple is fabricated by forming a cylinder out of a suitable rigid grid of material having interstices therein large enough to permit viscoelastic flowby of an elastomeric polymer.

Specific embodiments of the invention are now described by way of example only with reference to the accompanying drawings, in which :

FIG. 1 is a sideview of the nipple assembly showing a front bead, an optional back bead, and a cylindrical body of the nipple itself, made of a material formed into a grid ;

FIG. 2 is a perspective view of a nipple bead, which can be the end bead or the optional back bead ;

FIG. 3 is a partial cutaway, partially telescoped, and partial cross sectional view of the nipploe embedded in inner and outer layers of elastomer;

FIG. 4 is a partial cutaway, partially telescoped, and partial cross sectional view of a more preferred embodiment of the invention, showing the nipple embedded in between inner and outer layers of elastomer, there also being present additional intermediate layers of elastomer and one or more layers of reinforcement ;

FIG. 5 is a cross sectional view of a preferred embodiment of the invention, showing the nipple fully embedded in between inner and outer layers of elastomer that have now been fully cured and are continuous, there also being shown various layers of fabric and metal reinforcement as well as an overall silhouette of the finished hose article ; and

FIG. 6 is a cross sectional view taken along line 6-6 of FIG. 5, showing the nipple embedded in between inner and outer layers of elastomer after full cure so that the elastomer is continuous, along with a layer of reinforcement being illustrated.

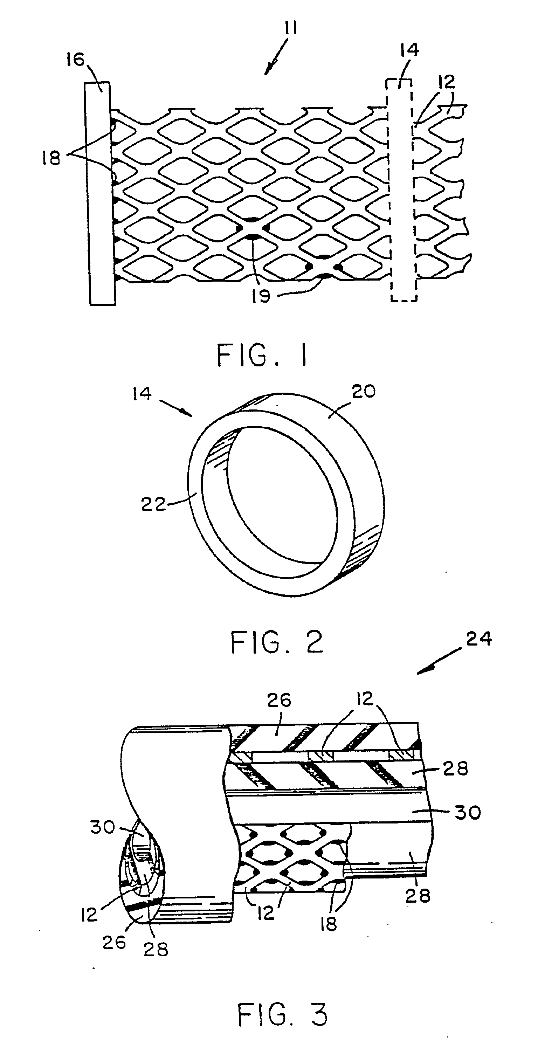

Turning first to FIG. 1, there is seen in cross section the actual intersticed nipple shown generally at 11. It basically consists of two subcomponents, and in a more preferred embodiment, uses a third subcomponent. Firstly, at 12 there is the nipple that has the shape of a cylinder. The walls of the cylinder that define the nipple is made up of a grid of some type of material that will have many interstices or holes in it. In the most preferred embodiment, this material is expanded metal. Alternatively, it can be a cylinder that was punctured or had many holes bored through its wall. As it will be readily appreciated by those skilled in the art, this material could be any suitably rigid screen work or mesh work. At 16, there is shown the nipple end bead. The end bead, shown more clearly in the perspective view in FIG. 2, is a ring and most preferably is an annular ring. Such an annular ring will have well defined rear and front faces shown at 22 and a well defined rim face shown at 20. Returning to FIG. 1, the nipple end bead 16 is shown mounted circumferentially on the cylinder shaped nipple 12. Most preferably, the nipple end bead is mounted as close as possible to the end of the nipple 12. The nipple end bead 16 may be fastened onto the nipple 12 by one or more welds illustrated at 18. Furthermore, for a hose expected to take extremely large pressures or stresses, additional welds may be added at junctures where the grid work intersects on the nipple, as illustrated at 19. Moving further along the body of the nipple 12, there is seen a nipple back bead 14. The nipple back bead is not absolutely essential, but is included in a more preferred embodiment of the invention. The nipple back bead will usually have an identical construction to the nipple end bead described above. The nipple back bead may be circumferentially mounted anywhere along the cylinder defining the nipple 12. In most cases, it will be preferred that the nipple end bead 16 and the nipple back bead 14 not be mounted adjacent to each other.

Turning now to FIG. 3 there is shown in partial cutaway, partial telescoped, and partial cross sectional views, the intersticed nipple embedded in between inner and outer layers of elastomer prior to curing. The nipple 12 has been seated in a cap-like manner over an inner layer of elastomer 28. There is also wound over the nipple 12 an outer elastomer layer 26. Thus it can clearly be seen that the nipple is sandwiched in between the inner 28 and outer 26 layers of elastomers. Within the inner layer of elastomer 28, there is the hose article conduit 30 through which the commodity will flow.

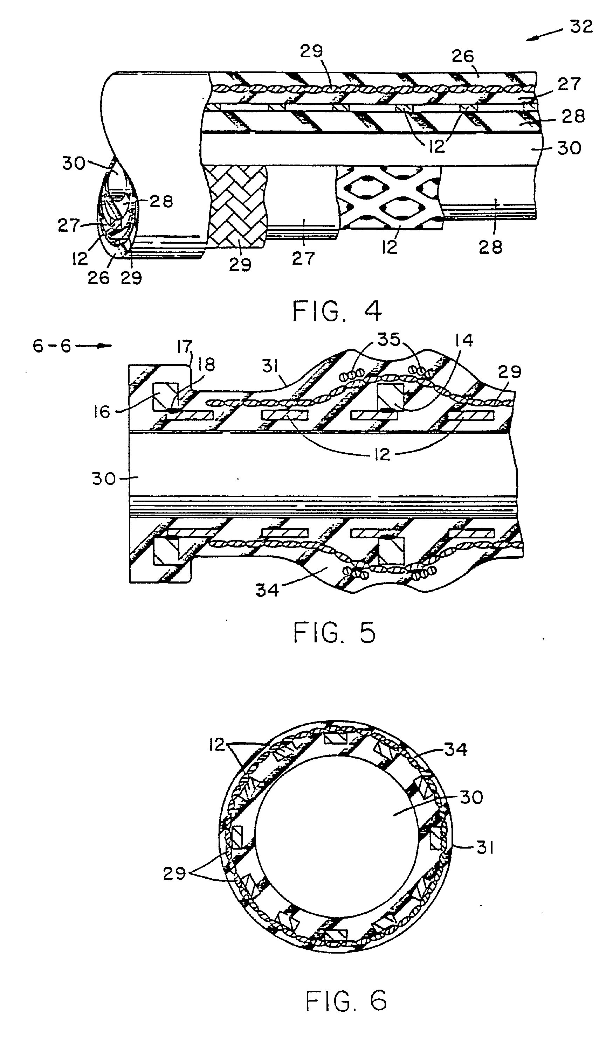

Turning now to FIG. 4, there is again in partial cutaway, partial telescoped, and partial cross sectional views a preferred embodiment of a hose article with the intersticed nipple embedded therein. An inner layer of elastomer 28 has been capped with the nipple 12. Over the nipple 12, there has been applied at least one intermediate friction layer of elastomer 27. Over the intermediate friction layer 27 there has applied at least one reinforcement member 29. In most cases, the reinforcement member 29 will be a woven or braided textile material. Over the reinforcement layer 29 there is shown the outer elastomeric cover 26, which may be composed of multiple layers of elastomer.

At FIG. 5 there is shown in cutaway cross sectional view a most preferred embodiment of the hose article containing the embedded intersticed nipple fitting, after curing has been completed. From the hose article interior conduit 30 to its exterior 31, it can be seen that after curing, the cured elastomer 34 has flowed around and through all the available interstices of the nipple 12. Likewise, it has completely flowed around the nipple end bead 16 and the nipple back bead 14. As the reinforcement layer 29 was laid down over the hose article during construction, it formed what can be seen in cross section to be a humped area over the nipple back bead 14. Over the reinforcement layer 29, there were applied multiple strands of a cable reinforcement member 35, which had the function of tying the reinforcement layer 29 down as tightly over the contours of the nipple 12 and nipple back bead 14 as possible. As layers of elastomeric material were applied over the nipple end bead 16, the shoulder-like area shown generally at 17 was formed. It will be recalled from the discussion of the background of the invention that a shoulder-like area is needed in hose articles where connection is to be made by means of mounting a flange onto the hose article. It will readily be appreciated by those skilled in the art that where a sizable enough shoulder 17 has been built up over the end of the hose article, that this will provide a useful and effective upright structure against which the flange can be mounted and grip the hose article. It should also be readily apparent from FIG. 5 that the entire structure of the nipple is effectively embedded within a continuous, cohesive agglomerated and agglutinated mass of cured elastomer, which will tend to minimize adhesion problems between the nipple and the elastomer since each individual piece of the grid work making up the nipple is itself surrounded by solid elastomer. This structure is superior to having a solid cylinder in which anchoring must rely on adhesion between the outside of the cylinder and elastomer and adhesion between the inside of the cylinder and elastomer and where there is simply no opportunity for the elastomer of the inner and outer layers to meet and bond with each other to become a unified whole.

Finally, turning to FIG. 6, there is shown along line 6-6 of FIG. 5, an end-on cross section of a portion of the cured hose article having the intersticed nipple embedded therein. Again, from the hoses' interior conduit 30 to its exterior surface 31, it can be seen that cured elastomer 34 has completely flowed around each member of the grid work of the nipple and through all of the interstices associated with the grid work.

Having described in great detail the drawings, there will now be described the preferred embodiments of the invention. As stated before, the intersticed nipple fitting is basically comprised of nipple, a nipple end bead, and in a more preferred embodiment, a nipple back bead. The cylinder shaped nipple is expanded metal preferably steel, which makes up a grid that has a plurality of interstices in it. Frequently, the nipple has been welded together to form its cylindrical shape. As those skilled in the art know, expanded metal tends to have a regularly repeating diamond shaped pattern in which each diamond shaped segment has a pair of opposed acute angle corners and a pair of opposed obtuse angle corners. The nipple can be formed into its cylindrical shape with the diamond shape pattern either oriented such that the opposed acute angle corners are aligned substantially parallel to the axis of the cylinder defining the nipple, or it can be oriented such that the opposed obtuse angled corners are aligned substantially parallel to the axis of the cylinder defining the nipple.

The nipple end bead, which will generally be an annular ring, should have an interior cylindrical surface that is substantially the same circumference as that of the nipple upon which the nipple end bead is circumferentially mounted.

Likewise, a nipple back bead will be circumferentially mounted on the nipple. Ordinarily, the nipple end bead and the nipple back bead will be mounted on the nipple so that each bead's plane is substantially perpendicular to the axis of the cylinder defining the nipple.

The nipple need not necessarily be made of a metal. It can be made of a polymer material or a composite material, particularly epoxy reinforced with a fiberglass. Whatever the material that is picked for the nipple, a key criterion is that the plurality of interstices in the grid work are such that the interstices are large enough to permit viscoelastic flow-by of the elastomeric polymer during the curing process so as to result in the nipple being substantially embedded within the cured polymer which will become an agglomerated cohesive mass. The polymer chosen for this will usually be rubber.

Constructing an intersticed nipple fitting in accordance with the descriptions given above results in a unique method of making such a fitting and a unique product made in accordance with that method. After having constructed such a fitting, it is installed in a cap-like manner over the terminus of an elastomeric polymer tube that has been extruded by means well known to those skilled in the art. During construction, at least one intermediate friction layer of elastomeric polymer may be applied by sandwiching it in between the tube and the cover, and covering the nipple, the nipple end bead, and the nipple back bead. Furthermore, one or more textile reinforcement layers may be applied, sandwiching them in between the tube and the cover and covering the nipple, the nipple end bead, and the nipple back bead. Over such a reinforcement member, optionally there may be added a steel cable reinforcement member wrapped circumferentially over the nipple back bead and sandwiched between the nipple and the cover. After having completed such an assembly, it is then allowed to cure. It is during the curing process that the elastomer, through viscoelastic flow-by, will flow through the interstices of the nipple and between any other voids created in the subassembly to form one cohesive agglomerated agglutinated mass in which the entire nipple subassembly is substantially seated and embedded. This is all accomplished through means well known to those skilled in the art of hose building. Following the steps in constructing a hose article with a fitting embedded therein according to the description given above, will result in a novel and unique product, as well as a novel and unique method of making it.

Having completed construction of the invention, it can be put to use by mounting a flange means onto the terminus of the hose so that it can then be used to convey commodities. Typically, a flange having a hinge mounted in it so that it will open up into two "C" shape sections is used, the flange opened and then closed over the hose article, and made to slide until it is butted up against the shoulder on the terminus of the hose article. It is then mounted by means of inserting bolts through holes bored into the flange into another flange mounted either onto another section of hose or onto some other section of plumbing or tubing that one desires to have the hose connected to. Alternatively, the nipple end bead can be selected so as to be sufficiently thick in height that after construction of the hose, a shoulder has been formed on its terminus that sticks out perpendicularly from the body of the hose far enough to permit boring of holes through the shoulder on an axis parallel to the axis of the hose thus making the shoulder itself the flange instead of installing a separate flange.

It will of course be understood that the present invention has been described above purely by way of example, and that modifications of detail can be made.

## Claims

1. A nipple fitting for an elastomeric hose comprising a nipple (12) and a substantially annular nipple end bead (16) fixedly mounted circumferentially on said nipple, characterised in that
the nipple (12) is a perforated grid member defining a plurality of interstices and having a substantially cylindrical configuration and wherein the interstices are sufficiently large to permit viscoelastic flowby of an elastomer during a curing process.

2. A nipple fitting according to claim 1, wherein more than one annular bead is fixedly mounted circumferentially on said grid.

3. A nipple fitting according to claim 1 or claim 2, wherein the grid is substantially rigid.

4. A nipple fitting according to any preceding claim, wherein the nipple end bead is mounted on an end of said grid.

5. A nipple fitting according to any preceding claim, wherein the or each annular bead is fixedly secured to said grid by at least one weld.

6. A nipple fitting according to any one of claims 2 to 5, wherein one annular bead (14) is mounted on an end of said grid and a second annular bead is mounted intermediate the length of said grid.

7. A nipple fitting according to any preceding claim, wherein the perforated grid is made of expanded metal formed to said cylindrical configuration and welded.

8. A nipple fitting according to claim 7 wherein the grid is made of steel.

9. An elastomeric hose comprising :

a nipple fitting (11) according to any preceding claim ; and
a cured elastomeric hose, said nipple fitting being embedded in said elastomeric hose.

10. An elastomeric hose according to claim 9, comprising :
an elastomeric tube (28) ;
a nipple (12), seated on a terminus of the tube ;
at least one annular nipple bead (14, 16) fixably mounted circumferentially onto the nipple ; and
an elastomeric cover layer (26) applied over the tube and over the nipple where the nipple is seated onto the tube so as to cover the tube, the nipple and the nipple bead.

11. A hose according to claim 10 wherein an annular nipple end bead is fixably mounted circumferentially on an end of the nipple and an annular nipple back bead is fixably mounted circumferentially on the nipple spaced apart from said nipple end bead.

12. A hose according to claim 11 wherein the elastomeric tube and cover form one agglomerated and agglutinated cohesive mass, the grid of the nipple wall, the nipple end bead and the nipple back bead being substantially embedded within that mass.

13. A hose according to claim 11 or claim 12, further comprising at least one textile reinforcement layer (29) sandwiched in between the tube and cover, and covering the nipple, the nipple end bead and the nipple back bead.

14. A hose according to any one of claims 11, 12, or 13, further comprising at least one intermediate friction layer (27) of elastomeric polymer, sandwiched in between the tube and the cover, and covering the nipple, the nipple end bead and the nipple back bead.

15. A hose according to any one of claims 11 to 14, further comprising a steel cable reinforcement member (35), wrapped circumferentially substantially over the nipple back bead and sandwiched in between the nipple and the cover.

16. A hose assembly according to any one of claims 11 to 15, in which the nipple end bead is of sufficient thickness and height to form a shoulder on the terminus of the hose article capable of having a flange mounted thereon.

17. A hose according to any one of claims 11 to 16, in which the nipple end bead is of sufficient thickness and height to form a shoulder on the terminus of the hose article capable of being a flange.

18. A method of making an elastomeric hose article comprising the steps of :
fabricating a nipple (12) ;
fabricating an annular ring (16) ;
attaching the annular ring to the nipple circumferentially at a position substantially at the terminus of the nipple to form a nipple-annular ring assembly ;
extruding an elastomeric polymer tube (28) ;
mounting the nipple-annular ring assembly onto an end terminus of the tube by seating the assembly in a capped-like manner ; and

covering the tube and its nipple-capped terminus with an elastomeric polymer cover (26) ;

characterised in that the nipple is fabricated by forming a cylinder out of a suitable rigid grid of material having interstices therein large enough to permit viscoelastic flowby of an elastomeric polymer.

19. The method as claimed in claim 18, further comprising the additional step of curing the assembled components so that the elastomeric polymer forms an agglomerated, agglutinated cohesive mass, having flowed into the interstices of the nipple wall grid, and the grid thus being substantially anchored in that mass.

20. The method as claimed in claim 18 or claim 19, comprising the additional step of applying at least one textile reinforcement member (29), sandwiched in between the tube and the cover, and substantially over the nipple.

21. The method as claimed in any one of claims 18, 19 or 20 further comprising the additional step of fabricating a second annular ring (14) and attaching it circumferentially onto the nipple nonadjacently to the annular ring at the terminus of the nipple.

22. The method as claimed in any one of claims 18 to 21, further comprising the additional step of applying at least one intermediate friction layer (27) of elastomeric polymer, sandwiched in between the tube and the cover, and substantially over the nipple.

23. The method as claimed in claim 21 or claim 22, further comprising the additional step of applying a steel cable reinforcement member (35) wrapped circumferentially substantially over the nipple second annular ring, and sandwiched in between the nipple ring assembly and the cover.

## Revendications

1. Raccord à douille pour un tuyau élastomérique, comportant une douille (12) et un talon sensiblement annulaire (16) d'extrémité de douille monté fixement et circonférentiellement sur ladite douille, caractérisé en ce que

la douille (12) est un élément à grille perforée définissant plusieurs interstices et ayant une configuration sensiblement cylindrique, les interstices étant suffisamment grands pour permettre un écoulement visco-élastique d'un élastomère durant un processus de cuisson.

2. Raccord à douille selon la revendication 1, dans lequel plus d'un talon annulaire est monté fixement et circonférentiellement sur ladite grille.

3. Raccord à douille selon la revendication 1 ou la revendication 2, dans lequel la grille est sensiblement rigide.

4. Raccord à douille selon l'une quelconque des revendications précédentes, dans lequel le talon d'extrémité de la douille est monté sur une extrémité de ladite grille.

5. Raccord à douille selon l'une quelconque des revendications précédentes, dans lequel le ou chaque talon annulaire est assujetti fixement à ladite grille par au moins une soudure.

6. Raccord à douille selon l'une quelconque des revendications 2 à 5, dans lequel un talon annulaire (14) est monté sur une extrémité de ladite grille et un second talon annulaire est monté en un point intermédiaire de la longueur de ladite grille.

7. Raccord à douille selon l'une quelconque des revendications précédentes, dans lequel la grille perforée est réalisée en métal déployé formé à ladite configuration cylindrique et soudé.

8. Raccord à douille selon la revendication 7, dans lequel la grille est réalisée en acier.

9. Tuyau élastomérique comportant :

un raccord à douille (11) selon l'une quelconque des revendications précédentes ; et

un tuyau élastomérique cuit, ledit raccord à douille étant noyé dans ledit tuyau élastomérique.

10. Tuyau élastomérique selon la revendication 9, comportant :

un tube élastomérique (28) ;

une douille (12), emboîtée sur un bout du tube ;

au moins un talon annulaire (14, 16) de douille monté fixement et circonférentiellement sur la douille ; et

une couche élastomérique (26) de revêtement appliquée sur le tube et sur la douille, la douille étant emboîtée sur le tube afin de recouvrir le tube, la douille et le talon de la douille.

11. Tuyau selon la revendication 10, dans lequel un talon annulaire d'extrémité de douille est monté fixement et circonférentiellement sur une extrémité de la douille et un contre-talon annulaire de douille est monté fixement et circonférentiellement sur la douille à distance dudit talon d'extrémité de la douille.

12. Tuyau selon la revendication 11, dans lequel le tube élastomérique et le revêtement forment une masse cohésive agglomérée et agglutinée, la grille de la paroi de la douille, le talon d'extrémité de la douille et le contre-talon de la douille étant sensiblement noyés dans cette masse.

13. Tuyau selon la revendication 11 ou la revendication 12, comportant en outre au moins une couche textile (29) de renfort prise en sandwich entre le tube et le revêtement, et recouvrant la douille, le talon d'extrémité de la douille et le contre-talon de la douille.

14. Tuyau selon l'une quelconque des revendications 11, 12 ou 13, comportant en outre au moins une couche intermédiaire (27) de friction en polymère élastomérique, prise en sandwich entre le tube et le revêtement, et recouvrant la douille, le talon d'extrémité de la douille et le contre-talon de la douille.

15. Tuyau selon l'une quelconque des revendications 11 à 14, comportant en outre un élément (35) de renfort à câble d'acier enroulé circonférentiellement sensiblement sur le contre-talon de la douille et pris en sandwich entre la douille et le revêtement.

16. Ensemble à tuyau selon l'une quelconque des revendications 11 à 15, dans lequel le talon d'extrémité de la douille est d'une épaisseur et d'une hauteur suffisantes pour former un épaulement sur le bout de l'article à tuyau, sur lequel une bride peut être montée.

17. Tuyau selon l'une quelconque des revendications 11 à 16, dans lequel le talon d'extrémité de la douille est d'une épaisseur et d'une hauteur suffisantes pour former un épaulement sur le bout de l'article à tuyau, pouvant être une bride.

18. Procédé de réalisation d'un article à tuyau élastomérique comportant les étapes qui consistent :
à fabriquer une douille (12) ;
à fabriquer une bague annulaire (16) ;
à attacher la bague annulaire à la douille circonférentiellement en une position sensiblement au bout de la douille pour former un ensemble à douille-bague annulaire ;
à extruder un tube (28) de polymère élastomérique ;
à monter l'ensemble douille-bague annulaire sur un bout extrême du tube en emboîtant l'ensemble à la manière d'une coiffe ; et
à revêtir le tube et son bout coiffé de la douille d'un revêtement (26) de polymère élastomérique ; caractérisé en ce que la douille est fabriquée par formation d'un cylindre dans une grille de matière rigide convenable ayant des interstices suffisamment grands pour permettre un écoulement visco-élastique d'un polymère élastomérique.

19. Procédé selon la revendication 18, comprenant en outre l'étape supplémentaire qui consiste à cuire les pièces assemblées afin que le polymère élastomérique forme une masse cohésive agglomérée, agglutinée, ayant coulé dans les interstices de la grille de la paroi de la douille, et la grille étant ainsi sensiblement ancrée dans cette masse.

20. Procédé selon la revendication 18 ou la revendication 19, comprenant l'étape supplémentaire qui consiste à appliquer au moins un élément textile (29) de renfort, pris en sandwich entre le tube et le revêtement, et sensiblement sur la douille.

21. Procédé selon l'une quelconque des revendications 18, 19 ou 20, comprenant en outre l'étape supplémentaire qui consiste à fabriquer une seconde bague annulaire (14) et à l'attacher circonférentiellement sur la douille afin qu'elle ne soit pas adjacente à la bague annulaire située au bout de la douille.

22. Procédé selon l'une quelconque des revendications 18 à 21, comprenant en outre l'étape supplémentaire qui consiste à appliquer au moins une couche intermédiaire (27) de friction en polymère élastomérique, prise en sandwich entre le tube et le revêtement, et sensiblement sur la douille.

23. Procédé selon la revendication 21 ou la revendication 22, comprenant en outre l'étape supplémentaire qui consiste à appliquer un élément de renfort (35) en câble d'acier enroulé circonférentiellement sensiblement sur la seconde bague annulaire de la douille, et pris en sandwich entre l'ensemble à bague de la douille et le revêtement.

**Patentansprüche**

1. Nippelanschluß für einen elastomeren Schlauch, mit einem Nippel (12) und einem umfangsmäßig fest auf dem Nippel angebrachten, im wesentlichen ringförmigen Nippelendwulst (16), dadurch gekennzeichnet, daß
— der Nippel (12) ein perforiertes Gitterteil ist, das mehrere Zwischenräume begrenzt und eine im wesentlichen zylinderförmige Ausbildung aufweist, und bei dem die Zwischenräume ausreichend groß sind, um ein viskoelastisches Umfließen eines Elastomers während eines Härtungsvorgangs zu ermöglichen.

2. Nippelanschluß nach Anspruch 1, bei dem mehr als ein ringförmiger Wulst umfangsmäßig fest an dem Gitter angebracht ist.

3. Nippelanschluß nach Anspruch 1 oder Anspruch 2, bei dem das Gitter im wesentlichen starr ist.

4. Nippelanschluß nach einem der vorhergehenden Ansprüche, bei dem der Nippelendwulst an einem Ende des Gitters angebracht ist.

5. Nippelanschlußstück nach einem der vorhergehenden Ansprüche, bei dem der oder jeder ringförmige Wulst mit mindestens einer Schweißung fest an dem Gitter angebracht ist.

6. Nippelanschluß nach einem der Ansprüche 2 bis 5, bei dem ein ringförmiger Wulst (14) an einem Ende des Gitters und ein zweiter ringförmiger Wulst im Zuge der Länge des Gitters angebracht ist.

7. Nippelanschluß nach einem der vorhergehenden Ansprüche, bei dem das perforierte Gitter aus Streckmetall besteht, das zu der zylindrischen Form geformt und geschweißt ist.

8. Nippelanschluß nach Anspruch 7, bei dem das Gitter aus Stahl besteht.

9. Elastomerer Schlauch mit :
— einem Nippelanschluß (11) nach einem der vorhergehenden Ansprüche ; und
— einem gehärteten elastomeren Schlauch, wobei der Nippelanschluß in dem elastomeren Schlauch eingebettet ist.

10. Elastomerer Schlauch nach Anspruch 9 mit :
— einem elastomeren Rohr (28) ;
— einem auf einem Ende des Rohres sitzenden Nippel (12) ;

— wenigstens einem befestigbar umfangsmäßig an dem Nippel angebrachten ringförmigen Nippelwulst (14, 16) ; und

— einer elastomeren Hüllschicht (26), die an der Stelle, an der der Nippel auf dem Rohr sitzt, über dem Rohr und dem Nippel aufgebracht ist, um das Rohr, den Nippel und den Nippelwulst zu bedecken.

11. Schlauch nach Anspruch 10, bei dem ein ringförmiger Nippelendwulst befestigbar umfangsmäßig an einem Ende des Nippels und ein ringförmiger hinterer Nippelwulst befestigbar umfangsmäßig an dem Nippel mit Abstand zum Nippelendwulst angebracht ist.

12. Schlauch nach Anspruch 11, bei dem das elastomere Rohr und die Hülle eine agglomerierte und agglutinierte kohäsive Masse bilden, wobei das Gitter der Nippelwand, der Nippelendwulst und der hintere Nippelwulst im wesentlichen in dieser Masse eingebettet sind.

13. Schlauch nach Anspruch 11 oder Anspruch 12, ferner mit wenigstens einer textilen Verstärkungsschicht (29), die sandwichartig zwischen dem Rohr und der Hülle angeordnet ist und den Nippel, den Nippelendwulst und den hinteren Nippelwulst bedeckt.

14. Schlauch nach einem der Ansprüche 11, 12 oder 13, ferner mit wenigstens einer Reib-Zwischenschicht (27) aus elastomerem Polymer, die sandwichartig zwischen dem Rohr und der Hülle angeordnet ist und den Nippel, den Nippelendwulst und den hinteren Nippelwulst bedeckt.

15. Schlauch nach einem der Ansprüche 11 bis 14, ferner mit einem Stahlseil-Verstärkungsteil (35), das umfangsmäßig im wesentlichen über den hinteren Nippelwulst gewickelt und sandwichartig zwischen dem Nippel und der Hülle angeordnet ist.

16. Schlauchanordnung nach einem der Ansprüche 11 bis 15, bei der der Nippelendwulst von ausreichender Dicke und Höhe ist, um auf dem Ende des Schlauchartikels eine Schulter zu bilden, auf der ein Flansch anbringbar ist.

17. Schlauch nach einem der Ansprüche 11 bis 16, bei dem der Nippelendwulst von ausreichender Dicke und Höhe ist, um auf dem Ende des Schlauchartikels eine als Flansch geeignete Schulter zu bilden.

18. Verfahren zur Herstellung eines elastomeren Schlauchartikels mit den folgenden Schritten :

— Herstellen eines Nippels (12) ;

— Herstellen eines ringförmigen Ringes (16) ;

— umfangsmäßiges Befestigen des ringförmigen Ringes an dem Nippel an einer im wesentlichen am Ende des Nippels befindlichen Position, um eine Anordnung aus Nippel und ringförmigem Ring zu bilden ;

— Extrudieren eines elastomeren Polymer-Rohres (28) ;

— Befestigen der Anordnung aus Nippel und ringförmigem Ring an einem Ende des Rohres durch Aufsetzen des Nippels in der Art einer Bedeckung ; und

— Bedecken des Rohres und seines nippelbedeckten Endes mit einer elastomeren Polymerhülle (26) ; dadurch gekennzeichnet, daß der Nippel durch Bilden eines Zylinders aus einem geeigneten starren Gitter aus einem Material hergestellt wird, das Zwischenräume aufweist, die groß genug sind, ein viskoelastisches Umfließen eines elastomeren Polymers zu erlauben.

19. Verfahren nach Anspruch 18, ferner mit dem zusätzlichen Schritt des Härtens der zusammengefügten Komponenten, so daß das elastomere Polymer eine agglomerierte, agglutinierte, kohäsive, in die Zwischenräume des Nippelwandgitters geflossene Masse bildet, und das Gitter auf diese Weise im wesentlichen in dieser Masse verankert wird.

20. Verfahren nach Anspruch 18 oder 19 mit dem zusätzlichen Schritt des Anbringens wenigstens eines textilen Verstärkungsteiles (29), das sandwichartig zwischen dem Rohr und der Hülle und im wesentlichen über dem Nippel angebracht wird.

21. Verfahren nach einem der Ansprüche 18, 19 oder 20, ferner mit dem zusätzlichen Schritt des Herstellens eines zweiten ringförmigen Rings (14) und des umfangsmäßigen Befestigens des Rings an dem Nippel nicht-benachbart zu dem ringförmigen Ring am Ende des Nippels.

22. Verfahren nach einem der Ansprüche 18 bis 21, ferner mit dem zusätzlichen Schritt des Anbringens mindestens einer Reib-Zwischenschicht (27) aus elastomerem Polymer, die sandwichartig zwischen dem Rohr und der Hülle und im wesentlichen über dem Nippel angebracht wird.

23. Verfahren nach Anspruch 21 oder Anspruch 22, ferner mit dem zusätzlichen Schritt des Anbringens eines Stahlseil-Verstärkungsteils (35), das umfangsmäßig im wesentlichen über den zweiten ringförmigen Nippelring gewickelt und sandwichartig zwischen der Nippelringanordnung und der Hülle angeordnet wird.

FIG. 1

FIG. 2

FIG. 3

FIG. 4

FIG. 5

FIG. 6